**Europäisches Patentamt**

**European Patent Office**

**Office européen des brevets**

(19)

(11) Veröffentlichungsnummer: **0 127 240 B1**

(12) # EUROPÄISCHE PATENTSCHRIFT

(45) Veröffentlichungstag der Patentschrift:
07.10.87

(21) Anmeldenummer: 84200745.2

(22) Anmeldetag: 21.05.84

(51) Int. Cl.⁴: **B 09 B 1/00,** B 01 D 13/00,
C 02 F 9/00, C 02 F 3/28

(54) Verfahren zum Verarbeiten von Abfall sowie Mülldeponie mit Membranfiltrationeinheit.

(30) Priorität: 20.05.83 NL 8301818

(43) Veröffentlichungstag der Anmeldung:
05.12.84 Patentblatt 84/49

(45) Bekanntmachung des Hinweises auf die Patenterteilung:
07.10.87 Patentblatt 87/41

(84) Benannte Vertragsstaaten:
CH DE LI

(56) Entgegenhaltungen:
DE - A - 2 945 035
DE - A - 3 131 100
FR - A - 2 240 890
NL - A - 7 905 923
US - A - 3 586 624
US - A - 3 705 851
US - A - 4 323 367

CHEMICAL ABSTRACTS, Band 96, Nr. 7, 15. Februar 1982, Seite 334, Nr. 57297p, Columbus, Ohio, USA
CHEMICAL ABSTRACTS, Band 98, Nr. 12, 21. März 1983, Seite 339, Nr. 95150j, Columbus, Ohio, USA; H.J. EHRIG: "Evaporation of landfill leachate by using landfill gas"

(73) Patentinhaber: **STORK FRIESLAND B.V.,**
**Stationsweg 84, NL-8401 DT Gorredijk (NL)**

(72) Erfinder: **von Galen, Graf Franz-Heinrich,**
**Altenlingendorf 16, D-4450 Lingen/Altenlingen (DE)**
Erfinder: **Koestring, Volker, Am Mühlenstein 4,**
**D-4450 Lingen (DE)**
Erfinder: **Gons, Johan, Langewijk 17, NL-7701 AA**
**Dedemsvaart (NL)**

(74) Vertreter: **van der Veken, Johannes Adriaan et al,**
**EXTERPATENT B.V. Willem Witsenplein 4, NL-2596 BK**
**'s-Gravenhage (NL)**

### Beschreibung

Die Erfindung bezieht sich auf ein Verfahren zum Verarbeiten von Abfall durch Ablagern des Abfalls auf eine Mülldeponie, wobei man die Mülldeponie mit einem wasserundurchlässigen Boden versieht und die sich auf diesem Boden sammelnde Flüssigkeit einer Wasserreinigung unterwirft. Ein solches Verfahren zum Verarbeiten von Abfall ist bekannt aus der US-A-3.586.624. Dabei wird die sich auf den undurchlässigen Boden der Mülldeponie sammelnde Flüssigkeit, welche grosse Mengen an schädlichen Metallen enthält die bei der Perkolation von Regenwasser aus der Mülldeponie extrahiert werden, abgeführt und in einem Behälter mit Kalziumhydroxyd behandelt zum Präzipitieren der Metalle. Darauf wird das Wasser durch Aerieren und unter Einfluss von Sonnenlicht mit Sauerstoff versehen und dieses Wasser wird einem Fluss oder Wasserweg zugeführt.

Dieses Verfahren hat den Nachteil, dass das in dem Behälter behandelte Wasser noch immer wesentliche Mengen an schädlichen Metallen enthält welche nicht völlig präzipitieren und deshalb dieses gereinigte Wasser beim Abführen in einen Fluss zur Umweltverschmutzung führt.

Aufgabe der Erfindung ist ein Verfahren der obenerwähnten Art zu schaffen wobei die sich auf dem undurchlässigen Boden einer Mülldeponie sammelnde Flüssigkeit weitgehend von schädlichen Metallen befreit wird unter Anwendung des durch anaerobe Zersetzung in der Mülldeponie geformten Abfallgases zum Treiben der Vorrichtung zum Reinigen der obenerwähnten Flüssigkeit.

Diese Aufgabe wird erfindungsgemäss dadurch gelöst, dass die Wasserreinigung eine Membranfiltration umfasst, wobei das hergestellte Permeat abgeführt und das hergestellte Konzentrat einer Nachbehandlung unterworfen wird und man das in der Mülldeponie durch anaerobe Zersetzung geformte Abgfallgas sammelt und als Energie zum Treiben der Membranfiltration verwendet.

Bei Anwendung einer Membranfiltration bekommt man den grossen Vorteil, dass das abgeführte Permeat sofort in die Umwelt zurückgeführt werden kann ohne Nachteile für den Boden, während andererseits das Konzentrat mit einem viel höheren Gehalt an organischen oxidierbaren Stoffen einfach in anaeroben Reinigungsinstallationen weiter gereinigt werden kann, gegebenenfalls in anderer Weise z.B. durch Eindampfen in kleine Mengen von ungefährlichen Stoffen umgewandelt werden kann und obendrein Schwermetalle im wesentlichen völlig entfernt werden.

Es ist zu bemerken, dass die NL-A-7 905 923 die Anwendung einer Membranfiltration zum Reinigen von Abfallwasser offenbart, doch es handelt sich dabei um Abfallwasser mit niedrigen Konzentrationen an schädlichen Stoffen.

Wegen dem grossen Energieaufwand einer Membranfiltration war es dem Fachmann jedoch nicht geläufig, diese Membranfiltration zum Verarbeiten einer sich auf dem Boden einer Mülldeponie sammelnden Flüssigkeit mit hohen Konzentrationen an schädlichen Metallen anzuwenden.

Bei dem erfindungsgemässen Verfahren wird dieser Energieaufwand beseitigt, da man das in der Mülldeponie durch anaerobe Zersetzung der organischen Stoffe geformte Abfallgas sammelt und als Energie zum Treiben der Membranfiltration verwendet.

Bisher hat man nicht anerkannt, dass man das in der Mülldeponie aus den dort vorhandenen organischen Stoffen geformte Abfallgas sehr einfach und vorteilhaft zum Treiben einer Membranfiltration zum Reinigen der sich auf dem Boden einer Mülldeponie sammelnden Flüssigkeit verwenden kann.

Das in der Mülldeponie durch anaerobe Zersetzung der organischen Stoffe geformte Abfallgas, meistens in Form von Methan, kann man auch verwenden als Erwärmungsenergie zum Erhöhen der Temperatur der Flüssigkeit, welche der Membranfiltration ausgesetzt wird. Durch Temperaturerhöhung der Flüssigkeit wird nämlich der Flux, das heisst die Menge der durch die Membran hindurchgetretenen gereinigten Flüssigkeit pro Zeiteinheit, Oberflächeeinheit und Druck wesentlich erhöht. Zum Erhöhen der Temperatur der der Membranfiltration zu unterwerfenden Flüssigkeit wird diese vorzugsweise vorerwärmt durch Wärmeaustausch mit Verbrennungsgasen des Abfallgases.

Solche Verbrennungsgase können zweckmässig hergestellt werden durch Verbrennen des gebildeten Abfallgases in einem Verbrennungsmotor, welcher einen Generator treibt zum Erzeugen der elektrischen Energie zum Treiben von mindestens einer Pumpe, welche den für die Membranfiltration benötigten Druck und die Längsstromgeschwindigkeit liefert.

Durch Anwendung des in einer solchen Mülldeponie gebildeten Abfallgases kann man deshalb die durch die Membranfiltration benötigte Energie aus dem Abfall bekommen, so dass keine hohen Kosten entstehen zum Reinigen der sich auf dem Boden einer Mülldeponie sammelnden Flüssigkeit.

Wenn sich im Konzentrat im wesentlichen organische Stoffe befinden, kann man das Konzentrat entweder einer anaeroben Reinigungsinstallation zuführen, wo die organischen Stoffe in Methan umgewandelt werden oder das Konzentrat ohne weiteres in die Mülldeponie zurückführen. In diesem Fall wird das organische Material in der Mülldeponie in Abfallgas umgewandelt und deshalb zweckmässig verwendet. Wenn jedoch im Konzentrat schädliche Verbindungen vorhanden sind, kann es in bestimmten Fällen zu empfehlen sein, einen Teil des erzeugten Abfallgases in einem Verbrennungsraum zu verbrennen unter Einspritzen des Konzentrats, so dass die im Konzentrat anwesenden schädlichen Stoffe in nichtschädliche Stoffe umgewandelt werden können. Man kann das Verbrennungsresidu aus dem genannten Verbrennungsraum in die Mülldeponie zurückleiten.

Es ist selbstverständlich auch möglich, das Konzentrat in einem Trockner, zum Beispiel Bandtrockner, zu konzentrieren oder einzudampfen und zum Beispiel im Konzentrat anwesende schädliche Metalle können, wie allgemein üblich, in geschmolzene Silikatmaterialien eingekapselt werden.

Die Erfindung bezieht sich auch auf eine Mülldeponie, versehen mit einem wasserundurchlässigen Boden, wobei die Flüssigkeitsabfuhr dieses Bodens verbunden ist mit einer Wasserreinigungsanlage wie bekannt aus der US-A-3.586.624, welche erfindungsgemäss dadurch gekennzeichnet ist, dass die Flüssigkeitsabfuhr verbunden ist mit einer mit einem druckerzeugenden Pumporgan versehenen Membranfiltrationseinrichtung mit einer Permeatabfuhr und mit einer Konzentratabfuhr.

Bei Anwendung eines Gasverbrennungsmotors kann man die in der Mülldeponie erzeugten Abfallgase verwenden zum Treiben des Gasverbrennungsmotors, welcher seinerseits einen Generator treiben kann zum Erzeugen elektrischer Energie zum Treiben des Pumporgans für die Membranfiltrationseinrichtung.

Zweckmässig steht der Gasverbrennungsmotor in wirksamer Verbindung mit einem Generator.

Zweckmässig arbeitet man mit einer Verbrennungsvorrichtung, verbunden mit der Abfallgasabfuhr und mit einer Konzentrationsbehandlungszone, so dass man die im Konzentrat anwesenden schädlichen Stoffe konzentrieren und sogar verbrennen kann.

Die Erfindung wird jetzt erläutert werden an Hand eines Ausführungsbeispiels in Verbindung mit der Zeichnung. Es zeigen:

Fig. 1 eine erste Ausführungsform eines Verfahrens nach der Erfindung und

Fig. 2 ein anderes Ausführungsbeispiel der Ausführung des Verfahrens nach der Erfindung.

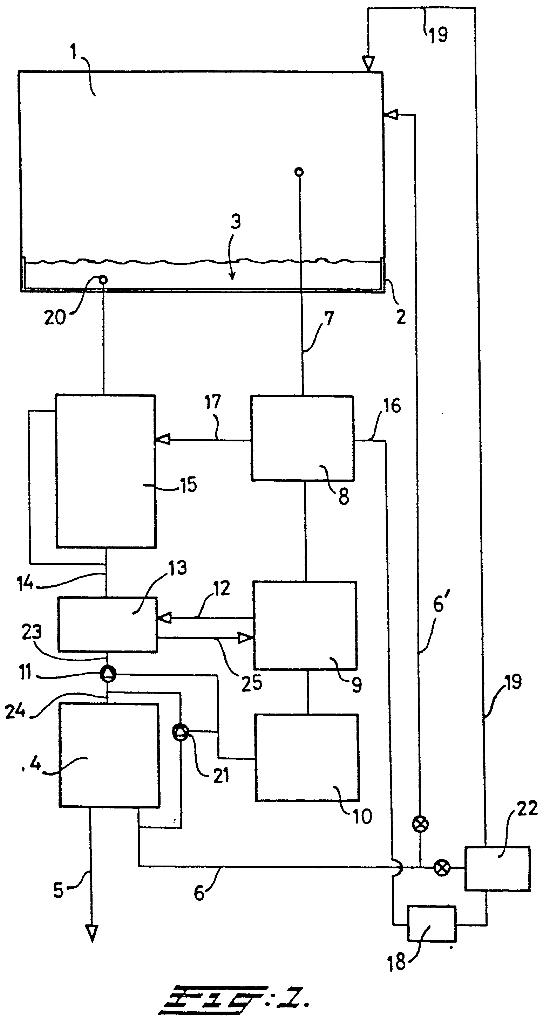

Fig. 1 zeigt eine Mülldeponie 1, welche unter anderem Hausabfall umfasst, mit einem Boden versehen mit einer Kunststoffolieschicht 2. Dadurch kann die am Boden der Mülldeponie sich sammelnde Flüssigkeit 3 sich nicht frei verbreiten und zu Bodenverunreinigungen führen.

Die Flüssigkeit 3 besteht im wesentlichen aus Regenwasser, das durch die Mülldeponie hindurchsickert und während des Durchsickerns auch organische Stoffe und anorganische Stoffe mit umweltschädlicher Wirkung löst. Durch Abfuhr 20 strömt die sich auf dem Boden 22 sammelnde Flüssigkeit 3 in Vorratsbehälter 15, wo sich die Feststoffe absetzen können, die übrige Flüssigkeit strömt durch Leitung 14 in Wärmeaustauscher 13. Die Flüssigkeit transportiert man mit einer Pumpe 11, welche sich in einer Verbindungsleitung 23 zwischen Wärmeaustauscher 13 und Membranfiltrationseinheit 4 befindet. Diese Membranfiltrationseinheit ist eine Umkehrosmoseeinheit, welche mit einem Druck von 4000 kPa und mit einer Längsstromgeschwindigkeit von 2,03 m/Sek. arbeitet.

Für eine sehr effektive Reinigung ist zwischen Konzentratabfuhr 6 und Zufuhr 24 der Umkehrosmoseeineit eine Rezirkulationspumpe 21 geschaltet, so dass man den erwünschten Druck in die Umkehrosmoseeinheit 4 gewährleisten kann.

Die Umkehrosmoseeinheit 4 ist weiter versehen mit einer Permeatabfuhr 5, um gereinigte Flüssigkeiten sofort in die Umwelt oder gegebenenfalls auf Oberflächewassern abführen zu können.

Um die Temperatur der im Wärmeaustauscher 13 strömenden Flüssigkeit zu erhöhen, wird der Wärmeaustauscher 13 gespeist mit Verbrennungsgasen durch Verbrennungsgasabfuhr 12 eines Gasmotors 9. Nach Passieren des Wärmeaustauschers strömen diese Gase durch Leitung 25 weg. Der Gasmotor 9 treibt einen Generator 10, welcher Elektrizität zum Treiben der Pumpen 11 und 21 erzeugt. Die erwärmte Flüssigkeit 3 strömt durch Leitung 23 in Umkehrosmoseeinheit 4. Flüssigkeiten 3 mit hohen Konzentrationen gelöster umweltschädlicher Stoffe werden ohne Erwärmung in die Einheit geleitet, um die Konzentration an schädlichen Stoffen im Permeat niedrig zu halten. Zum Treiben des Gasmotors 9 verwendet man das in der Mülldeponie erzeugte Abfallgas, das grosse Mengen im wesentlichen aus Methan bestehendem Gas enthält. Dieses Abfallgas wird durch Leitung 7 einem Feuchteabscheider 8 zugeführt. Feuchte strömt durch Leitung 17 in Vorratsbehälter 15, ein Teil des Gases wird dem Gasmotor 9 zugeführt und die Restmenge des Gases wird durch Leitung 16 abgeführt und zum Beispiel für andere Zwecke verwendet.

Das Konzentrat aus der Umkehrosmoseeinheit 4 kann man durch Leitung 6 einer nicht gezeigten Reinigungseinheit für anaerobe Gärung oder einer Verdampfungsinstallation 22 zuführen, in welcher Installation das Wasser verdampft wird mit Hilfe des in Verbrennungseinheit 18 verbrannten Abfallgases zum Herstellen eines Feststoffes oder einer konzentrierten Flüssigkeit.

Wenn das Konzentrat keine schädlichen Metalle enthält und im wesentlichen aus organischen Stoffen besteht, kann man das Konzentrat durch Leitung 6 in die Mülldeponie 1 zurückführen, wobei die organischen Stoffe mindestens teilweise in Abfallgas umgewandelt werden, vorausgesetzt dass sie nicht extrahiert werden durch durchsickerndes Regenwasser. Nachkonzentriertes Konzentrat aus Verdampfungsinstallation 22 kann durch Abfuhr 19, welche in oder über die Mülldeponie 1 ausmündet, auch in die Mülldeponie 1 zurückgeführt werden.

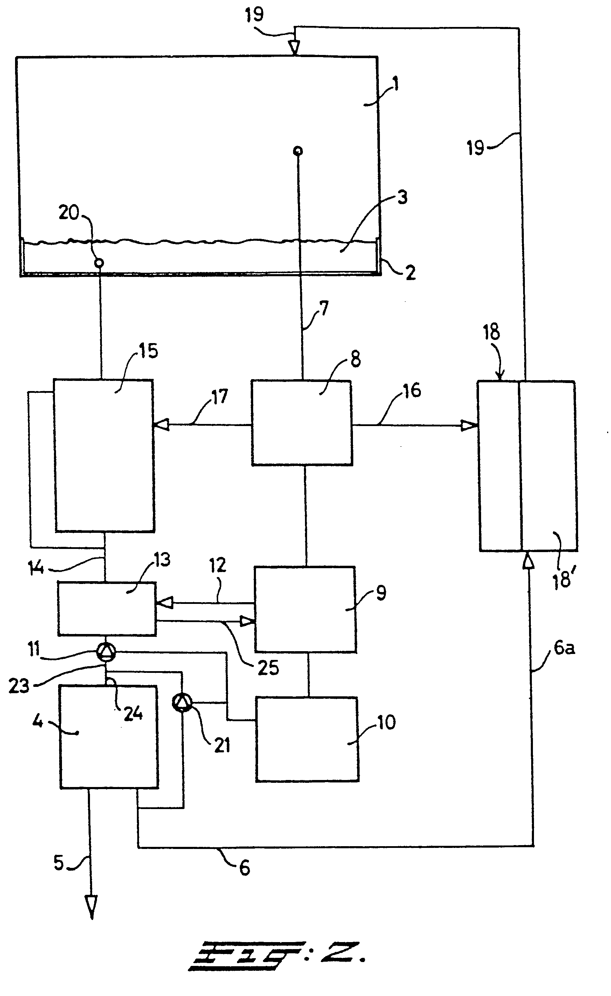

In der Ausführungsform nach Figur 2 wird das Gas aus Feuchteabscheider 8 durch Leitung 16 einer Verbrennungseinrichtung 18 zugeführt, welche andererseits gespeist wird mit Konzentrat durch Leitung 6a. In dieser Verbrennungseinrichtung 18 wird in der Konzentratnachbehandlungszone 18' das Konzentrat eingedampft und werden die schädlichen Stoffe verbrannt. Das Verbrennungsresidu wird abgeführt durch Abfuhr 19 oder zurückgeführt in die Mülldeponie. In diesem Fall umfasst die Verbrennungseinrichtung 18 auch eine Konzentratnachbehandlungszone 18', in welcher Zone das Konzentrat für die Verbrennung konzentriert wird zu trocken.

**Beispiel I**

Man arbeitet mit einer Mülldeponie mit einer Bodenfläche von 6 ha, aus welcher Mülldeponie pro Jahr 35 000 m³ sich auf dem als Folieschicht ausgeführten Boden 2 sammelnde Flüssigkeit 3 abgeführt werden soll, während aus der Mülldeponie pro Stunde 500 m³ Abfallgas gewonnen wird.

Die sich auf dem Boden 2 der Mülldeponie sammelnde Flüssigkeit 3 strömt in Vorratsbehälter 15 mit einem Inhalt von zum Beispiel 130 m³ aus welchem Vorratsbehälter 10 m³ Flüssigkeit pro Stunde dem Wärmeaustauscher 13 zugeführt wird.

Umkehrosmoseeinheit 4 liefert dann pro Stunde 7,5 m³ Permeat mit einem COD-Gehalt von höchstens 170 ml $O_2$/l.

Andererseits bekommt man pro Stunde 2,5 m³ Konzentrat, das man in der Verbrennungseinrichtung 18 verbrennen oder in der Verdampfungseinrichtung 22 konzentrieren kann.

65 m³ pro Stunde der in der Deponie gebildeten Abfallgasmenge wird einem 120-kW-Generator 10 treibenden Gasmotor 9 zugeführt, welcher 100 kWh Energie liefert zum Treiben der Pumpen 11 und 21 der Umkehrosmoseeinheit 4.

**Beispiel II**

In einer Mülldeponie mit einer wichtigen Menge Industrieabfall bekommt man auf den Boden 2 Flüssigkeit 3 mit einem total organischen Kohlenstoffgehalt von 1200 mgC/l.

Durch Umkehrosmose in der Membranfiltrationseinheit 4 bekommt man 20% Konzentrat mit einem total organischen Kohlenstoffgehalt von 5800 mg/l und 80% Permeat mit einem total organischen Kohlenstoffgehalt von 40 mgC/l. Das Konzentrat wird eingedampft und verbrannt, die Verbrennungsreste werden wegen der Gefahr von schädlichen Metallen eingekapselt in geschmolzenen Silikaten.

**Beispiel III**

Aus einer Mülldeponie mit im wesentlichen Haushaltabfall, bekommt man eine Flüssigkeit 3 mit einem COD-Gehalt von 8,320 mg $O_2$/l und mit einem Totalgehalt an löslichen Schwermetallen (im wesentlichen Zink, Kupfer, Palladium und Kadmium) von 58 mg/l.

Man trennt die Flüssigkeit 3 durch Umkehrosmose in der Membranfiltrationseinheit 4 in gleiche Teile Permeat und Konzentrat. Das Konzentrat mit einer COD von 30 300 mg $O_2$/l wird einem Methangas erzeugenden anaeroben Reaktor zugeführt.

Das Permeat mit einem COD-Gehalt von 65 mg $O_2$/l und mit einem Gehalt an gelösten Metallen von 0,12 mg/l wird auf einem Oberflächenwasser gelöst.

**Patentansprüche**

1. Verfahren zum Verarbeiten von Abfall durch Ablagern des Abfalls auf eine Mülldeponie (1), wobei man die Mülldeponie (1) mit einem wasserundurchlässigen Boden versieht und die sich auf diesem Boden (2) sammelnde Flüssigkeit (3) einer Wasserreinigung unterwirft, dadurch gekennzeichnet, dass die Wasserreinigung eine Membranfiltration (4) umfasst, wobei das hergestellte Permeat (5) abgeführt und das hergestellte Konzentrat (6) einer Nachbehandlung unterworfen wird und man das in der Mülldeponie (1) durch anaerobe Zersetzung geformte Abfallgas sammelt und als Energie zum Treiben der Membranfiltration (4) verwendet.

2. Verfahren nach Anspruch 1, dadurch gekennzeichnet, dass man das gebildete Abfallgas verbrennt in einem Verbrennungsmotor (9), welcher einen Generator (10) treibt zum Erzeugen elektrischer Energie mindestens zum Treiben einer Pumpe (11) zum Erzeugen des für die Membranfiltration (4) benötigten Drucks und der Längsstromgeschwindigkeit.

3. Verfahren nach Anspruch 1 oder 2, dadurch gekennzeichnet, dass man mindestens einen Teil des gebildeten Abfallgases (7) in einem Verbrennungsraum (18) verbrennt und die erzeugte Wärme verwendet zum Weiterkonzentrieren des Konzentrats und gegebenenfalls zum Verbrennen des Konzentrats.

4. Verfahren nach Anspruch 3, dadurch gekennzeichnet, dass man das bei der Weiterkonzentrierung des Konzentrats hergestellte Produkt in die Mülldeponie (1) zurückführt.

5. Verfahren nach Anspruch 1-4, dadurch gekennzeichnet, dass man die der Membranfiltration (4) zu unterwerfende Flüssigkeit vorerwärmt durch Wärmeaustausch (13) mit Verbrennungsgasen (12).

6. Mülldeponie (1) versehen mit einem wasserundurchlässigen Boden (2) und wobei die Flüssigkeitsabfuhr (20) dieses Bodens verbunden ist mit einer Wasserreinigungsanlage, dadurch gekennzeichnet, dass die Flüssigkeitsabfuhr verbunden ist mit einer mit einem druckerzeugenden Pumporgan (11, 21) versehenen Membranfiltrationseinrichtung (4), mit einer Permeatabfuhr (5) und mit einer Konzentratabfuhr (6) und eine Abfallgasabfuhr (7) anwesend ist zum Sammeln und Abführen des in der Mülldeponie (1) gebildeten Abfallgases, welche Abfallgasabfuhr (7) in Verbindung steht mit einem Gasverbrennungsmotor (9) zum Treiben des Pumporgans.

7. Mülldeponie nach Anspruch 6, dadurch gekennzeichnet, dass der Gasverbrennungsmotor seinerseits in wirksamer Verbindung mit einem Generator (10) steht.

8. Mülldeponie nach Anspruch 6 oder 7, dadurch gekennzeichnet, dass ein mit einer Flüssigkeitsabfuhr (20) und mit einer Verbrennungsabfuhr (12) verbundener Wärmeaustauscher (13) anwesend ist zum Durchleiten der Flüssigkeit aus der Flüssigkeitsabfuhr (20) unter Wärmeaustausch mit Verbrennungsgasen aus der Verbrennungsgasabfuhr (12).

9. Mülldeponie nach einem oder mehreren der Ansprüche 6-8, dadurch gekennzeichnet, dass eine Verbrennungseinrichtung (18) verbunden mit der Abfallgasabfuhr (7) zusammenwirkt mit einer Konzentratnachbehandlungszone (22, 18'), und vorzugsweise die Abfuhr (19) der Konzentratnachbehandlungszone (18', 22) in oder über die Mülldeponie (1) ausmündet.

## Claims

1. A method for processing waste by feeding the waste to a water container (1), the waste container (1) being provided with a floor which is impervious to water, and subjecting any fluid (3) collecting on that floor (2) to water purification, characterised in that: the water purification comprises a membrane filtration (4) with the resulting filtrate (5) being led off and with the resulting concentrate (6) being subjected to after-treatment; and the waste gas formed in the waste container (1) by anaerobic decomposition is collected and used as an energy source for effecting the membrane filtration (4).

2. A method according to claim 1, characterised in that the formed waste gas burns in a combustion motor (9) which drives a generator (10) to produce electric energy at least sufficient to drive a pump (11) for producing the pressure and longitudinal current velocity required for the membrane filtration (4).

3. A method according to claim 1 or 2, characterised in that at least part of the formed waste gas (7) is burned in a combustion chamber (18) and the heat produced is used for further concentration of the concentrate and, if desired, for burning the concentrate.

4. A method according to claim 3, characterised in that the product produced by further concentration of the concentrate is led back into the waste container (1).

5. A method according to any of claims 1 to 4, characterised in that the fluid to be subjected to membrane filtration (4) is preheated by heat exchange (13) with combustion gases (12).

6. A waste container (1) provided with a floor (2) which is impervious to water, a fluid outlet (20) from this floor being connected to a water purification system, characterised in that: the fluid outlet is connected to a membrane filtration apparatus (4) provided with a pressurizing pumping means (11, 21), with a filtrate outlet (5) and with a concentrate outlet (6); and a waste gas outlet (7) is present for collecting and leading off waste gas formed in the waste container (1), which waste gas outlet (7) communicates with a gas combustion motor (9) for providing power for the pumping means.

7. A waste container according to claim 6, characterised in that the gas combustion motor, for its part, powers a generator (10).

8. A waste container according to either of claims 6 and 7, characterised in that there is present a heat exchanger (13), in communication with the fluid outlet (20) and a combustion gas outlet (12), for conducting the fluid from the fluid outlet (20) under heat exchange with combustion gases from the combustion gas outlet (12).

9. A waste container according to any one or more of claims 6 to 8, characterised in that a combustion chamber (18), connected to the waste gas outlet (7), acts with a concentrate-after-treatment-zone (22 or 18') and the outlet (19) of the concentrate-after-treatment-zone (22 or 18') opens into or above the waste container (1).

## Revendications

1. Procédé de traitement de déchets par dépôt des déchets dans un décharge (1) pourvue d'un fond imperméable (2), le liquide (3) s'accumulant sur ce fond étant soumis à une épuration d'eau, caractérisée en ce que celle-ci comprend une filtration par membrane (4), le filtrat produit (5) étant évacué et le concentré obtenu (6) étant soumis à un traitement ultérieur et en ce qu'on collecte le gaz formé dans la décharge par décomposition anaérobie et qu'on l'utilise comme énergie pour faire marcher la filtration par membrane (4).

2. Procédé suivant la revendication 1, caractérisé en ce qu'on brûle le gaz de déchet produit dans un moteur à combustion (9) lequel actionne un générateur (10) produisant l'énergie électrique alimentant au moins une pompe (11) qui fournit la pression et le débit longitudinal nécessaires à la filtration par membrane (4).

3. Procédé suivant la revendication 1 ou 2, caractérisé en ce qu'on brûle au moins une partie du gaz de déchet produit (7) dans une chambre de combustion (18) et que la chaleur ainsi produite sert à poursuivre la concentration du concentré et, le cas échéant, à brûler ce dernier.

4. Procédé suivant le revendication 3, caractérisé en ce qu'on retourne le produit obtenu lors de la concentration ultérieure du concentré dans la décharge (1).

5. Procédé suivant la revendication 1 à 4, caractérisé en ce qu'on préchauffe le liquide à soumettre à la filtration par membrane (4) par échange de chaleur (13) avec des gaz de combustion (12).

6. Décharge (1) pourvue d'un fond imperméable (2), dont le conduit (20) de sortie du liquide est relié à une station d'épuration d'eau, caractérisée en ce que ledit conduit de sortie du liquide est relié à un dispositif de filtration par membrane (4) pourvu d'un organe de pompe (11, 21) produisant de la pression, d'un conduit d'évacuation du filtrat (5), et d'un conduit pour le concentré (6) et en ce qu'un conduit de sortie (7) est prévu pour collecter et transporter le gaz formé par décomposition dans la décharge (1), ce conduit de sortie (7) étant connecté à un moteur de combustion de gaz pour actionner l'organe de pompe.

7. Décharge suivant la revendication 6, caractérisée en ce que le moteur à combustion de gaz se trouve, de son côté, connecté de manière efficace à un générateur (10).

8. Décharge suivant la revendication 6 ou 7, caractérisée en ce qu'il y est prévu un échangeur de chaleur (13) relié à un conduit d'évacuation du liquide (20) et à un conduit de gaz de combustion (12) pour amener le liquide du conduit de sortie (20) en échange de chaleur avec le gaz de combustion sortant du conduit de gaz (12).

9. Décharge suivant une ou plusieurs des revendications 6 à 8, caractérisée en ce qu'une installation de combustion (18) en liaison avec le conduit du gaz formé par décomposition (7) fonctionne avec une zone de traitement ultérieur du concentré (22, 18') et en ce que, de préférence, le conduit d'évacuation (19) de la zone de traitement ultérieur du concentrat (18', 22) débouche dans ou audessus de la décharge (1).

FIG:1.

FIG. 2.